# EUROPÄISCHE PATENTSCHRIFT

(11) **EP 1 544 553 B1**
(45) Veröffentlichungstag und Bekanntmachung des Hinweises auf die Patenterteilung: **07.10.2009**
(21) Anmeldenummer: 04027364.1
(22) Anmeldetag: 18.11.2004
(51) Int. Cl.: F24F 3/16, F24F 7/10

(54) **Einrichtung zur Konditionierung von Umluft, vorzugsweise von Reinluft**
Arrangement for conditioning recirculation air, in particular clean air
Système pour conditionner de l'air de recirculation, en particulier de l'air purifié

(30) Priorität: 18.12.2003 DE 10361335; 26.03.2004 DE 102004016402
(43) Veröffentlichungstag der Anmeldung: 22.06.2005
(73) Patentinhaber: M+W Zander Products GmbH, 70499 Stuttgart (DE)
(72) Erfinder: Bauer, Helmut, 71634 Ludwigsburg (DE); Renz, Manfred, Dr., 71254 Ditzingen (DE)
(74) Vertreter: Jackisch-Kohl, Anna-Katharina

(56) Entgegenhaltungen:
- DE-A1- 3 018 817
- US-A- 4 747 341
- US-A- 5 830 058
- US-B1- 6 368 393
- PATENT ABSTRACTS OF JAPAN Bd. 1998, Nr. 03, 27. Februar 1998 (1998-02-27) & JP 09 287791 A (HITACHI PLANT ENG & CONSTR CO LTD), 4. November 1997 (1997-11-04)

## Beschreibung

Die Erfindung betrifft eine Einrichtung zur Konditionierung von Umluft, vorzugsweise von Reinluft, nach dem Oberbegriff des Anspruches 1 bzw. 16.

In der Reinraumtechnik ist es bekannt, an der Decke des Reinraumes Kühler zur Kühlung der Umluft anzuordnen. Für die Kühler auf der Reinraumdecke müssen Leitungen verlegt werden, was einen erheblichen konstruktiven Aufwand erfordert. Das Deckenlayout kann wegen der Leitungen nur mit großem Aufwand geändert werden. Außerdem besteht bei Kühlern das Risiko der Leckage. Der Kühler kann tropfen, so dass das Equipment im Reinraum beschädigt werden kann.

Bei der bekannten Einrichtung (Patent Abstracts of Japan Bd. 1998, Nr. 03, 27. Februar 1998 (1998-02-27) & JP 09 287791 A (Hitachi Plant Eng & Constr. Co Ltd), 4. November 1997 (1997-11-04)) ist das Gehäuse der Filter-Ventilator-Einheit mit Abstand von einem zweiten Gehäuse umgeben. Dadurch wird zwischen dem Gehäuse der Filter-Ventilator-Einheit und dem zweiten Gehäuse ein Strömungsraum gebildet, über den ein Teil der Umluft unter Umgehung des Rückführkanales der Filter-Ventilator-Einheit direkt zugeführt wird.

Auch bei einer anderen bekannten Einrichtung (US-B1-6 368 393) wird das Gehäuse einer Filter-Ventilator-Einheit von einem zweiten Gehäuse mit Abstand umgeben. Beide Gehäuse sind durch Laschen miteinander verbunden. Das Gehäuse der Filter-Ventilator-Einheit und das zweite Gehäuse bilden einen Strömungsraum, durch den ein Teil der Umluft unter Umgehung des Rückführkanales der Filter-Ventilator-Einheit direkt zugeführt wird.

Der Erfindung liegt die Aufgabe zugrunde, die gattungsgemäße Einrichtung so auszubilden, dass sie bei konstruktiv einfacher Ausbildung eine optimale Betriebsweise ermöglicht.

Diese Aufgabe wird bei der gattungsgemäßen Einrichtung erfindungsgemäß mit den kennzeichnenden Merkmalen des Anspruches 1 bzw. 16 gelöst.

Bei der erfindungsgemäßen Einrichtung wird ein Teil der Umluft über den Rückführkanal der Filter-Ventilator-Einheit zugeführt. Der andere Teil der Umluft gelangt unter Umgehung des Rückführkanales direkt zur Filter-Ventilator-Einheit. Durch diese Aufteilung der Umluft ist es möglich, nur den über den Rückführkanal strömenden Teil der Umluft zu kühlen, während der der Filter-Ventilator-Einheit direkt zugeführte Umluftteil ungekühlt bleiben kann. Im Bereich des Rückführkanales kann der Umluftkühler so angeordnet werden, dass er selbst bei Leckage nicht in den Bereich tropfen kann, dem die Umluft entnommen wird. Da für den direkt der Filter-Ventilator-Einheit zugeführten Umluftteil eine Kühlung nicht erforderlich ist, entfallen für diesen Teil entsprechend die Umluftkühler, so dass die erfindungsgemäße Einrichtung mit geringem konstruktivem Aufwand kostengünstig hergestellt werden kann. Wird die Einrichtung bei Reinräumen eingesetzt, lassen sich im Deckenbereich eines solchen Reinraumes die Filter-Ventilator-Einheiten beispielsweise im Rastermaß anordnen. Da jeder Filter-Ventilator-Einheit der Umluftteil im gleichen Maße direkt zugeführt wird, weist die Zuluft aus jeder Filter-Ventilator-Einheit die gleiche Temperatur auf. Eine nachträgliche Änderung des Deckenlayouts ist ohne Probleme möglich, da Umluftkühler und entsprechende Verrohrungen nicht vorhanden sind.

Bei der Einrichtung nach Anspruch 1 ist der Strömungskanal, über den der Filter-Ventilator-Einheit der eine Teil der Umluft direkt zugeführt wird, in das Gehäuse der Filter-Ventilator-Einheit integriert. Dadurch sind außerhalb des Gehäuses befindliche Zusatzeinrichtungen für die Zuführung dieses Umluftteiles nicht erforderlich.

Bei der Einrichtung nach Anspruch 16 wird der Umluftteil über das Rohr direkt der Filter-Ventilator-Einheit zugeführt. Dieser Umluftteil gelangt in eine Mischzone, in die auch der über den Rückführkanal zurückgeführte Umluftteil strömt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung eine erfindungsgemäße Einrichtung zur Konditionierung von Umluft,
- Fig. 2 bis Fig. 7: jeweils in schematischer Darstellung unterschiedliche Ausführungsbeispiele für Filter-Ventilator-Einheiten der erfindungsgemäßen Einrichtung,
- Fig. 8: in einer Darstellung entsprechend den Fig. 2 bis 7 eine weitere Ausführungsform einer Filter-Ventilator-Einheit,
- Fig. 9: eine Draufsicht auf die Filter-Ventilator-Einheit gemäß Fig. 8,
- Fig. 10 bis Fig. 12: jeweils in Draufsicht ein Deckenlayout von verschiedenen Ausführungsbeispielen der erfindungsgemäßen Einrichtung,
- Fig. 13: in einer Darstellung entsprechend den Fig. 2 bis 8 eine weitere Ausführungsform einer Filter-Ventilator-Einheit, ,
- Fig. 14: eine Draufsicht auf das Filter der Filter-Ventilator-Einheit gemäß Fig. 13,
- Fig. 15 und 16: jeweils eine weitere erfindungsgemäße Filter-Ventilator-Einheit in einer Darstellung entsprechend den Fig. 2 bis 8.

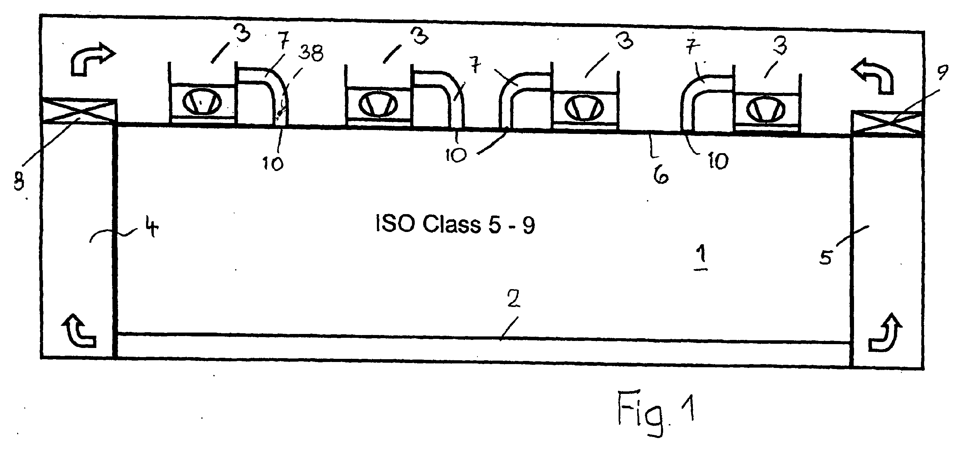

Die Einrichtung dient zur Konditionierung von Umluft, vorzugsweise in Reinräumen. Fig. 1 zeigt ein Beispiel eines Reinraumes 1, der einen Doppelboden 2 aufweist. Im Deckenbereich des Reinraumes 1 sind Filter-Ventilator-Einheiten 3 angeordnet, über die jeweils Reinluft nach unten in den Reinraum 1 gefördert wird. An einander gegenüberliegenden Seiten des Reinraumes 1 befinden sich Rückluftschächte 4, 5, die sich vom Boden 2 bis zur Decke 6 des Reinraumes erstrecken. Die Filter-Ventilator-Einheiten 3 saugen die Umluft aus dem Doppelbodenbereich über die Rückluftschächte 4, 5 in bekannter Weise an. Jeder Filter-Ventilator-Einheit 3 ist eine Ansaugleitung 7 zugeordnet, die in die Decke 6 des Reinraumes 1 mündet und über die jeweils ein Teil der Umluft direkt der jeweiligen Filter-Ventilator-Einheit 3 zugeführt wird. Im Beispielsfall sind die Rückluftschächte 4, 5 und die Ansaugleitungen 7 so ausgebildet, daß jeweils 50 % der Rückluft den Filter-Ventilator-Einheiten 3 zugeführt wird. Da nicht die gesamte Umluft über den Doppelboden 2 und die Rückluftschächte 4, 5 geführt wird, kann sowohl die lichte Höhe des Doppelbodens 2 als auch die Querschnittsfläche der Rückluftschächte 4, 5 klein gewählt werden. Dementsprechend können auch am Strömungsende der Rückluftschächte 4, 5 vorgesehene Umluftkühler 8, 9 kleinere Anströmflächen aufweisen als bei herkömmlichen Reinräumen. Die in der Decke 6 liegenden Öffnungen 10 führen einen Teil der Umluft direkt den Filter-Ventilator-Einheiten 3 zu. Der Luftwiderstand der Öffnungen 10 in der Decke 6 ist mit dem Rückluftwiderstand in den Rückluftschächten 4, 5 über die Kühler 8, 9 abgeglichen. Der Umluftwiderstand wird durch die Rückführung der Umluft über den Doppelboden 2 und die Rückluftschächte 4, 5 bestimmt und kann gering gehalten werden. Der über die Öffnungen 10 angesaugte Anteil der Rückluft wird nicht gekühlt. Der über die Rückluftschächte 4, 5 angesaugte Teil der Umluft muß allerdings stärker gekühlt werden als bei einem Reinraum, bei dem die gesamte Umluft über die Rückluftschächte zurückgeführt wird. Die gekühlte Rückluft wird mit der über die Ansaugleitungen 7 zurückgeführten, nicht gekühlten Rückluft unmittelbar über dem Ansaugbereich der Filter-Ventilator-Einheiten 3 optimal vermischt.

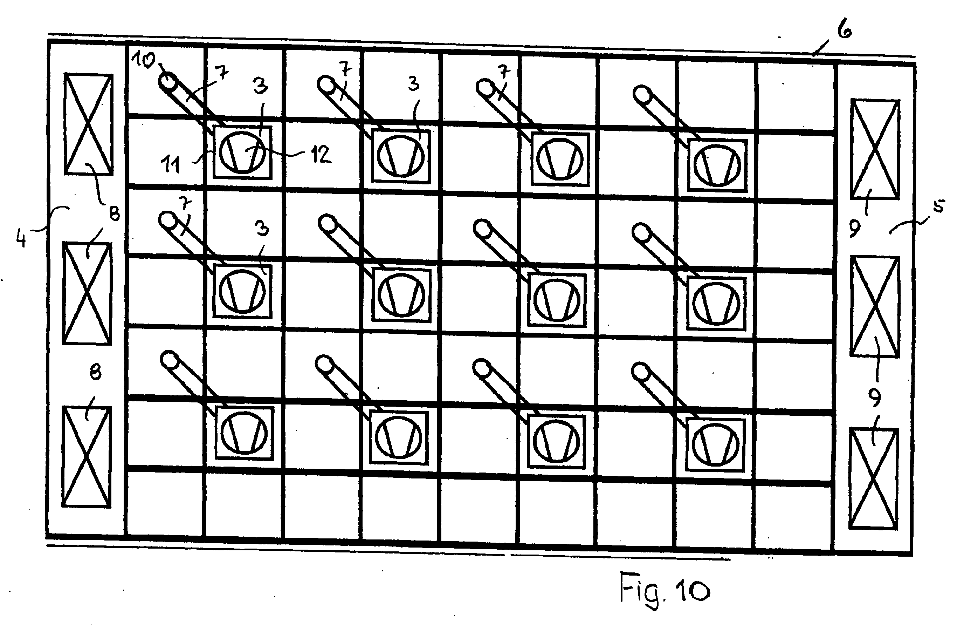

Die Filter-Ventilator-Einheiten 3 sind in herkömmlicher Weise auf der Decke 6 vorteilhaft im Rastermaß befestigt (Fig. 10 bis 12).

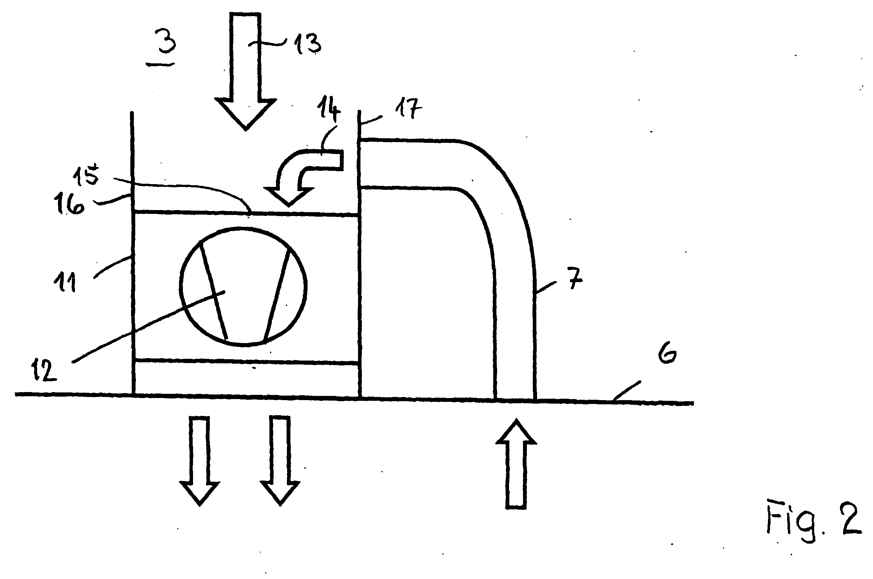

Fig. 2 zeigt eine Filter-Ventilator-Einheit 3 mit einem Gehäuse 11, in dem ein Gebläse 12 untergebracht ist. Es saugt die gekühlte Umluft 13 und die über die Ansaugleitung 7 zugeführte, nicht gekühlte Umluft 14 an. Im Bereich oberhalb des Ansaugbereiches 15 der Filter-Ventilator-Einheit 3 werden die gekühlte und die ungekühlte Umluft 13, 14 miteinander vermischt. Die Umluft tritt nach dem Durchgang durch die Filter-Ventilator-Einheit 3 als Zuluft 18 nach unten in den Reinraum ein.

Das Gehäuse 11 der Filter-Ventilator-Einheit 3 hat beispielhaft viereckigen Umriß. Die Seitenwände 16, 17 des Gehäuses 11 sind nach oben verlängert und umschließen den Ansaugbereich 15. An die eine Seitenwand 17 ist die Ansaugleitung 7 angeschlossen. Wie Fig. 2 zeigt, ist der Ansaugbereich 15 nach oben offen, so daß die aus den Rückluftschächten 4, 5 angesaugte gekühlte Umluft 13 ungehindert in den Ansaugbereich strömen kann. Die Ansaugleitung 7 kann als Schlauch oder als formstabiler Kanal ausgebildet sein. Die Ansaugleitung 7 schließt senkrecht an die Seitenwand 17 an. Die aus der Ansaugleitung 7 strömende Umluft 14 wird im Ansaugbereich 15 um etwa 90° nach unten abgelenkt und vermischt sich mit der von oben nach unten strömenden gekühlten Umluft 13.

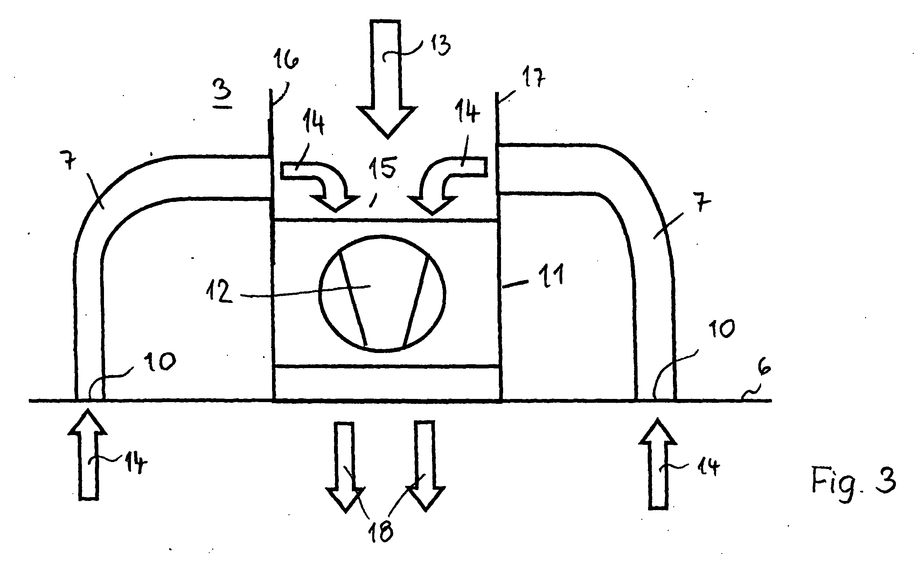

Fig. 3 zeigt die Möglichkeit, an der Filter-Ventilator-Einheit 3 zwei Ansaugleitungen 7 anzuschließen. Vorteilhaft sind die beiden Ansaugleitungen 7 an die einander gegenüberliegenden Seitenwände 16, 17 des Gehäuses 11 angeschlossen. Beide Ansaugleitungen 7 münden in die Decke 6, so daß über die Ansaugöffnungen 10 in der Decke 6 die Umluft angesaugt wird. Wie beim vorigen Ausführungsbeispiel sind die Ansaugleitungen 7 L-förmig ausgebildet und münden im Bereich der verlängerten Seitenwände 16, 17. Da die ungekühlte Umluft 14 mit Abstand oberhalb des Gebläses 12 in den Ansaugbereich 15 einströmt, wird die Umluft 14 nach dem Austritt aus den Ansaugleitungen 7 um etwa 90° nach unten umgelenkt. Die aus den Rückluftschächten 4, 5 kommende gekühlte Umluft 13 strömt entsprechend der vorigen Ausführungsform von oben nach unten und vermischt sich mit der ungekühlten Umluft 14.

Die beiden Ansaugleitungen 7 haben gleichen Strömungsquerschnitt. Es ist aber auch möglich, daß die beiden Ansaugleitungen 7 unterschiedlichen Strömungsquerschnitt aufweisen.

Je nach Anforderung kann die Filter-Ventilator-Einheit 3 auch mehr als zwei Ansaugleitungen 7 aufweisen. Bei einem rechteckigen Umriß des Gehäuses 11 kann beispielsweise an jede Seitenwand eine Ansaugleitung angeschlossen sein.

Wie bei der vorigen Ausführungsform liegen die Ansaugöffnungen 10 in der Decke 6 mit Abstand zur zugehörigen Filter-Ventilator-Einheit. Dadurch ist gewährleistet, daß die Ansaugung der Rückluft 14 durch die aus der Filter-Ventilator-Einheit nach unten austretende Zuluft 18 und umgekehrt nicht gestört wird. Die Ansaugleitungen 7 können wiederum durch Schläuche oder durch formstabile Kanäle und dergleichen gebildet sein.

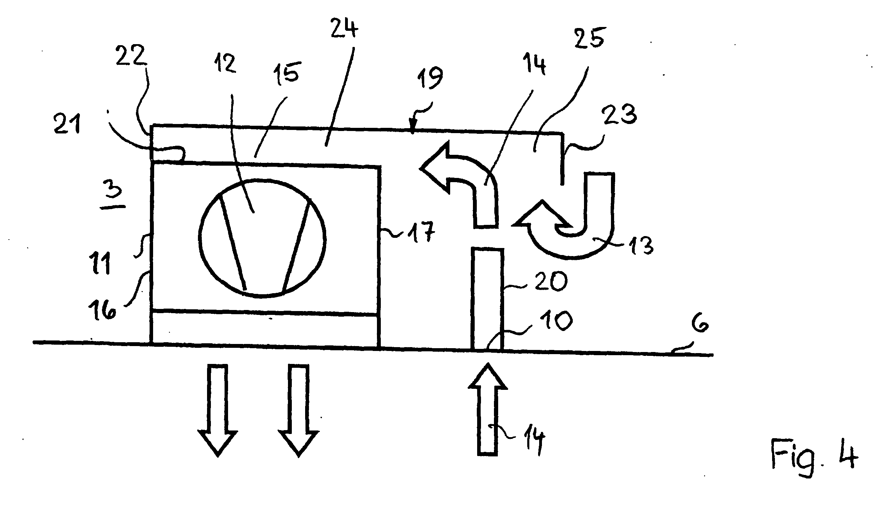

Fig. 4 zeigt die Möglichkeit, die über die Öffnung 10 in der Decke 6 angesaugte Umluft 14 mittels eines Leitbleches 19 dem Ansaugbereich 15 der Filter-Ventilator-Einheit 3 zuzuführen. An die Ansaugöffnung 10 schließt senkrecht ein Rohr 20 an, das mit Abstand zur Filter-Ventilator-Einheit 3 vorgesehen ist und geringere Höhe hat als das Gehäuse 11 der Filter-Ventilator-Einheit 3. Das Leitblech 19 liegt mit geringem Abstand oberhalb einer Decke 21 des Gehäuses 11. Das Leitblech 19 weist einen rechtwinklig abgewinkelten Rand 22 auf, der an die Gehäuseseitenwand 16 in Höhe der Decke 21 anschließt. Das Leitblech 19 ragt über die gegenüberliegende Gehäuseseitenwand 17 sowie über das Rohr 20. Das überstehende Ende 23 des Leitbleches 19 ist ebenfalls rechtwinklig nach unten abgewinkelt und erstreckt sich über die die Decke 21 des Gehäuses 11 enthaltende Ebene. Das Leitblech 19 liegt mit Abstand oberhalb der Decke 21 und bildet zusammen mit ihr einen Strömungskanal 24, über den sowohl die ungekühlte Umluft 14 als auch die gekühlte Umluft 13 zum Ansaugbereich 15 gelangt. Das Leitblech 19 überdeckt die gesamte Fläche der Decke 21 des Gehäuses 11.

Die über die Öffnung 10 angesaugte Umluft 14 strömt durch das Rohr 20 senkrecht nach oben. Die Umluft 14 trifft auf den über das Gehäuse 11 überstehenden Bereich des Leitbleches 19 und wird an ihm horizontal in Richtung auf den Strömungskanal 24 umgelenkt. Die aus den Rückluftschächten 4, 5 kommende gekühlte Umluft 13 umströmt den abgewinkelten Rand 23 des Leitbleches 19 und wird an ihm um 180° umgelenkt. Die umgelenkte Umluft 13 trifft ebenfalls auf den über die Filter-Ventilator-Einheit 3 überstehenden Teil des Leitbleches 19 und wird an ihm ebenfalls in Richtung auf den Strömungskanal 24 umgelenkt. Die Vermischung der gekühlten und der ungekühlten Umluft 13, 14 erfolgt in einem Mischbereich 25, der im Bereich neben der Filter-Ventilator-Einheit 3 liegt. Auf ihrem Weg zum Gebläse 12 werden die beiden Umluftströme einwandfrei miteinander vermischt, bevor sie in das Gehäuse 11 gesaugt werden. Der Strömungskanal 15 kann nicht nur durch den abgewinkelten Rand 22, sondern auch an seinen in Strömungsrichtung liegenden Seiten geschlossen sein, so daß der Strömungskanal lediglich in Richtung auf den Mischbereich 25 offen ist.

Der von den Rückluftschächten 4, 5 kommende Teil 13 kann auch ganz oder teilweise über wenigstens eine Öffnung im Leitblech 19 im Bereich oberhalb der Filter-Ventilator-Einheit 3 dem Gebläse 12 direkt zugeführt werden.

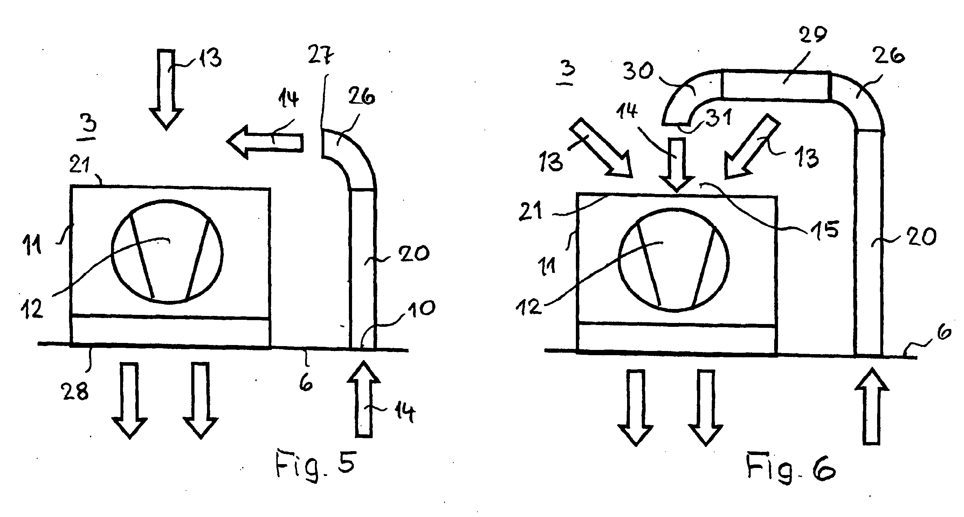

Bei der Ausführungsform nach Fig. 5 ist das Rohr 20 gleich hoch wie das Gehäuse 11 der Filter-Ventilator-Einheit 3. An das Rohr 20 schließt ein etwa 90° gekrümmtes Rohrstück 26 an, aus dem die ungekühlte Umluft 14 horizontal ausströmt. Die Austrittsöffnung 27 des Rohrstückes 26 befindet sich, in Seitenansicht gemäß Fig. 10 gesehen, mit Abstand vom Gehäuse 11. Die über die Öffnung 10 in der Decke 6 angesaugte Umluft 14 strömt aus der Austrittsöffnung 27 in Richtung auf die Filter-Ventilator-Einheit 3, durch deren Gebläse 12 die Umluft angesaugt wird. Die aus den Rückluftschächten 4, 5 angesaugte gekühlte Umluft 13 strömt von oben in die Filter-Ventilator-Einheit 3. Die horizontal strömende Umluft 14 wird in Richtung auf das Gebläse 12 nach unten umgelenkt und vermischt sich hierbei vor dem Eintritt in die Filter-Ventilator-Einheit 3 mit der gekühlten Umluft 13. Bei diesem Ausführungsbeispiel wird die in der Decke 21 des Gehäuses 11 befindliche Ansaugöffnung gezielt angeblasen. Die Ansaugöffnung 10 in der Decke 6 hat entsprechend den vorhergehenden Ausführungsformen ausreichenden Abstand von der Austrittsöffnung der Filter-Ventilator-Einheit 3. Dadurch wird die Ansaugung der Umluft 14 nicht durch die aus der Austrittsöffnung 28 nach unten in den Reinraum austretende Reinluft gestört.

Die Filter-Ventilator-Einheit 3 gemäß Fig. 6 ist gleich ausgebildet wie bei der Ausführungsform nach Fig. 5. Mit Abstand neben dem Gehäuse 11 steht von der Decke 6 das Rohr 20 senkrecht nach oben ab, das über das Gehäuse 11 ragt. An das Rohrstück 26 ist ein horizontales Leitungsstück 29 angeschlossen, an das seinerseits ein Endstück 30 angeschlossen ist. Es ist wie das Rohrstück 26 ein 90°-Rohrbogen, aus dem die ungekühlte Umluft 14 oberhalb der in der Decke 21 des Gehäuses 11 befindlichen Ansaugöffnung nach unten austritt. Die Austrittsöffnung 31 des Endstückes 30 liegt mit einem solchen Abstand von der Decke 21, daß die durch das Gebläse 12 angesaugte gekühlte Umluft 13 sich mit der ungekühlten Umluft 14 im Ansaugbereich 15 ausreichend vermischen kann. Auch bei dieser Ausführungsform wird die in der Gehäusedecke 21 befindliche Ansaugöffnung gezielt mit der ungekühlten Umluft 14 angeblasen. Da sich die Austrittsöffnung 21 unmittelbar oberhalb der Ansaugöffnung befindet, wird die ungekühlte Umluft 14 bei ihrem Strömungsweg zum Gebläse 12 nicht umgelenkt.

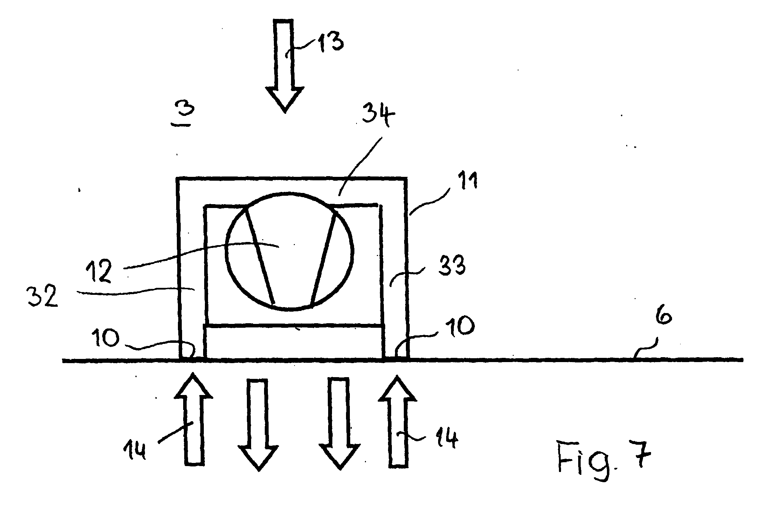

Bei der Ausführungsform nach Fig. 7 wird die ungekühlte Umluft 14 innerhalb der Filter-Ventilator-Einheit zum Gebläse 12 geführt. Im Beispielsfalle hat die Filter-Ventilator-Einheit zwei Ansaugöffnungen 10 in der Reinraumdecke 6. An die Öffnungen 10 schließt jeweils ein Strömungskanal 32, 33 an, in dem die Umluft 14 nach oben in einen horizontalen Strömungskanal 34 strömt. Von hier aus gelangt die Kühlluft zum Gebläse 12. Die Strömungskanäle 32 bis 34 sind in das Gehäuse 11 der Filter-Ventilator-Einheit 3 integriert, so daß außerhalb des Gehäuses befindliche Zusatzeinrichtungen für die Zuführung der Umluft 14 zum Gebläse 12 nicht erforderlich sind. Die aus den Rückluftschächten 4, 5 kommende gekühlte Umluft 13 wird von oben angesaugt. Sie vermischt sich vor dem Eintritt in das Gebläse 12 mit der im Strömungskanal 34 strömenden ungekühlten Umluft 14.

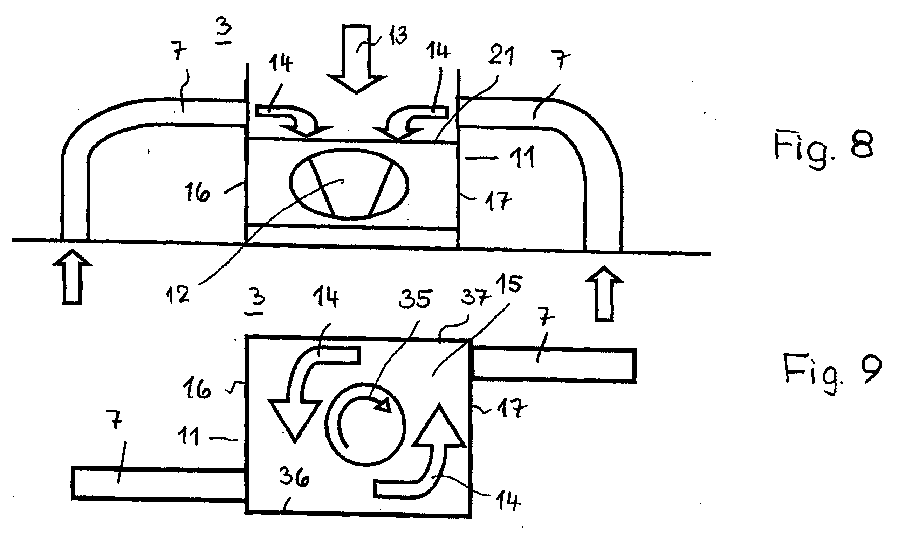

Die Fig. 8 und 9 zeigen die Möglichkeit, auf der Saugseite des Gebläses 12 der zugeführten ungekühlten Umluft 14 einen Gegendrall in bezug auf die Drehrichtung 35 des Gebläses 12 zu verleihen. Erreicht wird dies dadurch, daß die beiden Ansaugleitungen 7 an den Seitenwänden 16, 17 des Gehäuses 11 der Filter-Ventilator-Einheit 3 nicht fluchtend einander gegenüberliegend an die Seitenwände 16, 17 anschließen, sondern versetzt zueinander. Die in den Fig. 8 und 9 linke Ansaugleitung 7 schließt nahe der Vorderwand 36 und die rechte Ansaugleitung 7 nahe der Rückwand 37 des Gehäuses 11 an die Seitenwand 16 bzw. 17 an. Dadurch tritt die Umluft 14 aus den Ansaugleitungen 7 nahe der Vorderwand 36 sowie nahe der Rückwand 37 in den von den verlängerten Gehäusewänden 16, 17, 36, 37 umschlossenen Ansaugbereich 15 ein. Die Einströmrichtung der Umluft 14 in den Ansaugbereich 15 ist der Drehrichtung 35 des Gebläses 12 entgegengerichtet. Durch diesen Gegendrall wird der Betriebsbereich der Filter-Ventilator-Einheit 3 erweitert. Der Gegendrall läßt sich gezielt einstellen. Wie bei der Ausführungsform nach Fig. 3 münden die Ansaugleitungen 7 mit Abstand von der Decke 21 des Gehäuses 11 in den Ansaugbereich 15. Im übrigen ist die Ausführungsform nach den Fig. 8 und 9 gleich ausgebildet wie das Ausführungsbeispiel gemäß Fig. 3.

Fig. 10 zeigt ein Beispiel für ein Deckenlayout unter Einsatz der beschriebenen Filter-Ventilator-Einheiten 3. Die Decke 6 des Reinraumes ist in bekannter Weise im Rastermaß erstellt. Die Rückluftschächte 4, 5 erstrecken sich über die gesamte Breite des Reinraumes 1. In den beiden Rückluftschächten 4, 5 sind jeweils drei Umluftkühler 8, 9 mit Abstand nebeneinander angeordnet. Die Rückluftschächte 4, 5 sind schmal ausgebildet und erstrecken sich über die Breite des Reinraumes. Auf der Decke 6 sind die Filter-Ventilator-Einheiten 3 montiert, die in Reihen hinter- und nebeneinander angeordnet sind. Alle Filter-Ventilator-Einheiten 3 sind gleich ausgebildet und haben jeweils eine Ansaugleitung 7, die jeweils im Eckbereich des Gehäuses 11 der Filter-Ventilator-Einheiten angeschlossen ist. Die Ansaugleitungen 7 münden in der beschriebenen Weise in die Decke 6, so daß sie über die Öffnungen 10 in der Decke 6 einen Teil der Umluft ansaugen können. Da die Ansaugleitungen 7 diagonal in bezug auf die Filter-Ventilator-Einheiten 3 angeordnet sind, liegen die Ansaugöffnungen 10 jeweils in den diagonal zu den Filter-Ventilator-Einheiten 3 benachbarten Rasterteilen der Decke 6.

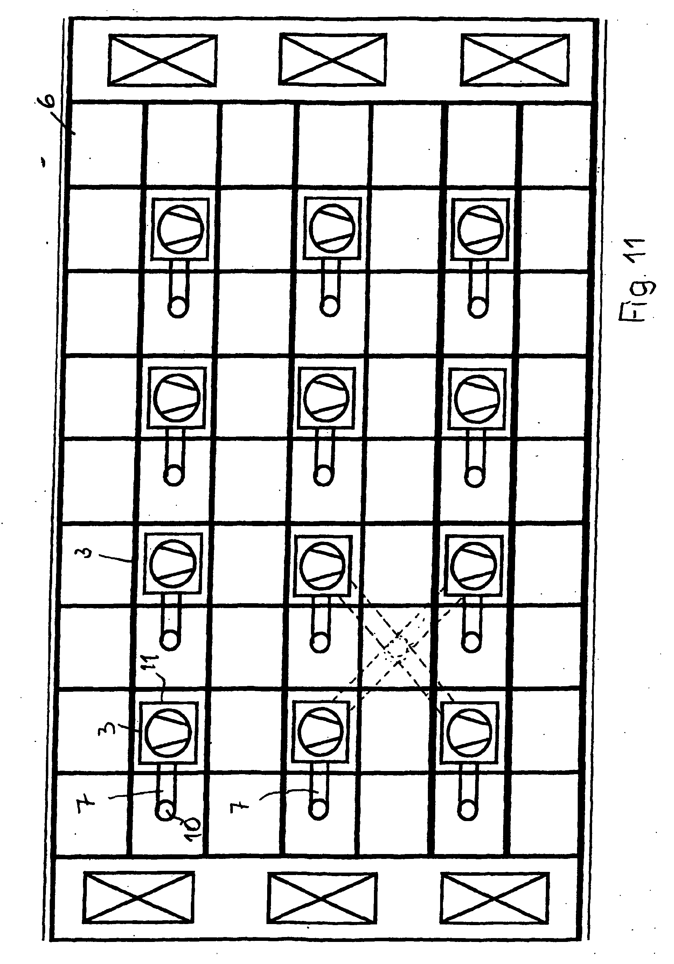

Beim Deckenlayout gemäß Fig. 11 schließen die Ansaugleitungen 7 der Filter-Ventilator-Einheiten 3 senkrecht an das Gehäuse 11 an. Die Filter-Ventilator-Einheiten 3 haben somit eine Ausbildung entsprechend Fig. 2. Die Ansaugöffnungen 10 in der Decke 6 liegen somit in den unmittelbar vor den Filter-Ventilator-Einheiten 3 liegenden Rasterelementen der Decke 6. Die Filter-Ventilator-Einheiten 3 sind wiederum in Reihe neben- und hintereinander angeordnet und entsprechend dem Ausführungsbeispiel gemäß Fig. 10 gleichmäßig verteilt über die Decke 6 angeordnet. Sämtliche Filter-Ventilator-Einheiten 3 sind entsprechend dem vorigen Ausführungsbeispiel gleich ausgerichtet.

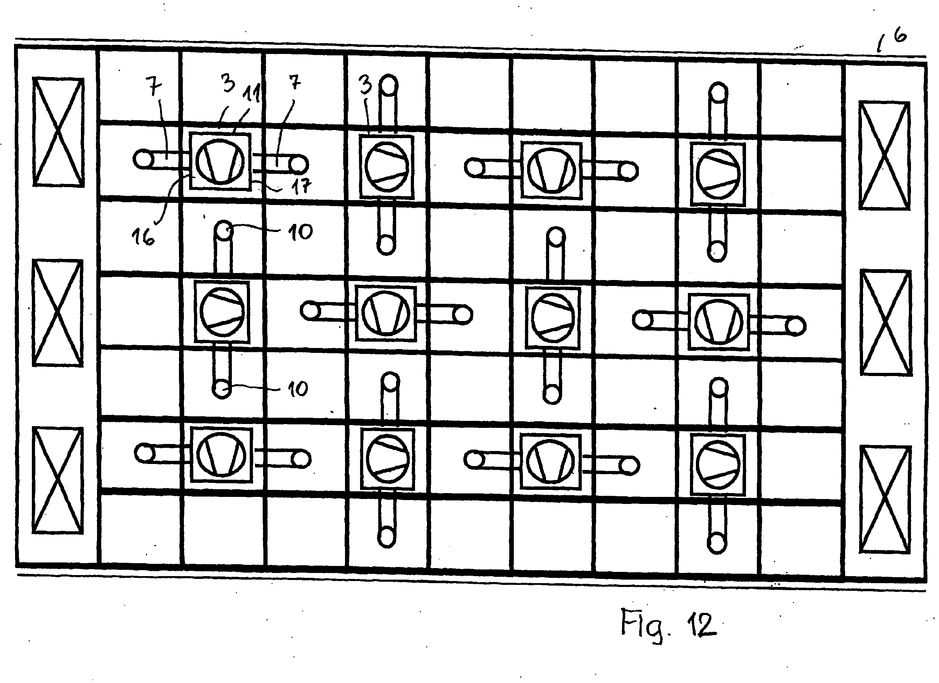

Fig. 12 zeigt die Möglichkeit, die Ansaugleitungen 7 unterschiedlich an die Filter-Ventilator-Einheiten 3 anzuschließen. Die Filter-Ventilator-Einheiten 3 sind bei diesem Ausführungsbeispiel mit zwei Rückluftanschlüssen entsprechend dem Ausführungsbeispiel gemäß Fig. 3 versehen. Die beiden Ansaugleitungen 7 jeder Filter-Ventilator-Einheit 3 liegen fluchtend zueinander und schließen an die einander gegenüberliegenden Seitenwände 16, 17 des Gehäuses 11 an. Jeweils benachbarte Filter-Ventilator-Einheiten 3 haben um 90° versetzt zueinander angeordnete Ansaugleitungen 7. Die Ansaugöffnungen 10 in der Decke 6 liegen in den zu den Filter-Ventilator-Einheiten 3 jeweils benachbarten Rasterelementen der Decke 6. Da die Filter-Ventilator-Einheiten 3 jeweils nur durch ein Rasterelement voneinander getrennt sind, sind die Ansaugleitungen 7 benachbarter Filter-Ventilator-Einheiten jeweils um 90° versetzt zueinander angeordnet. Befinden sich zwischen benachbarten Filter-Ventilator-Einheiten 3 zwei Rasterelemente, dann können die Ansaugleitungen 7 benachbarter Filter-Ventilator-Einheiten auch gleich ausgerichtet sein.

Die anhand der Fig. 10 bis 12 dargestellten Ausführungsbeispiele sind nicht erschöpfend. Die Filter-Ventilator-Einheiten können je nach den Anforderungen und Einbauverhältnissen in jeder geeigneten Weise auf der Decke 6 montiert sein. Es ist sogar möglich, auf der Decke 6 unterschiedliche Ausführungsformen von Filter-Ventilator-Einheiten 3 vorzusehen.

Im beschriebenen Ausführungsbeispiel ist der Reinraum 1 so ausgelegt, daß etwa 50 % der Umluft über die Rückluftschächte 4, 5 und etwa 50 % über die Öffnungen 10 in der Decke 6 den Filter-Ventilator-Einheiten 3 zugeführt wird. Dieses Aufteilungsverhältnis kann hiervon abweichen. So könnte beispielsweise der Anteil an Umluft, der über die Rückluftschächte 4, 5 zurückgeführt wird, bei 70 % liegen, während die restlichen 30 % an Umluft über die Ansaugöffnungen 10 in der Decke 6 angesaugt werden. Je größer der über die Öffnungen 10 angesaugte Anteil an Umluft ist, desto stärker müssen die Umluftkühler 8, 9 in den Rückluftschächten 4, 5 die durch sie angesaugte Umluft kühlen.

Die beschriebene Gestaltung der Konditioniereinrichtung führt zu einem konstruktiv sehr einfachen und insbesondere preisgünstigen Aufbau. Die in den Reinraum 1 geförderte Zuluft 18 weist an jeder Filter-Ventilator-Einheit 3 gleiche Temperatur auf. Da die Druckverhältnisse im Reinraum 1 sowie in den Rückluftschächten 4, 5 sowie im Bereich der Ventilatoren 3 oberhalb der Decke 6 gleich sind, ist auch der aus den Filter-Ventilator-Einheiten 3 austretende Luftanteil stets gleich.

Bei allen beschriebenen Ausführungsformen kann in der Ansauleitung 7 bzw. im Rohr 20 wenigstens eine Drosseleinrichtung 38, vorzugsweise eine Klappe, vorgesehen sein (Fig. 1). Mit ihr kann der Durchströmquerschnitt und damit der Volumenstrom manuell oder gesteuert verändert werden. Auf diese Weise lassen sich evtl. auftretende örtliche Temperaturunterschiede im Reinraum 1 kompensieren. Ist beispielsweise der Umluftteil 14 an einer Öffnung 10 im Vergleich zu den Umluftteilen der benachbarten Öffnung sehr warm, dann wird mit der Drosseleinrichtung 38 der Volumenstrom der durch diese Öffnung 10 strömenden Umluftteiles 14 so verringert, daß die von der entsprechenden Filter-Ventilator-Einheit 3 in den Reinraum 1 strömende Zuluft 18 die gleiche Temperatur hat wie die aus den benachbarten Filter-Ventilator-Einheiten austretende Zuluft.

Die Temperaturkompensation kann aber auch durch Veränderung der Drehzahl des Gebläses 12 erreicht werden. Bei dem beschriebenen Fall des örtlich sehr warmen Umluftteiles 14 wird die Drehzahl erhöht, so daß ein größerer Anteil an gekühlter Umluft 13 angesaugt wird.

Bei den beschriebenen Deckenlayouts gemäß den Figuren 10 bis 12 wird jede Filter-Ventilator-Einheit 3 über eine oder zwei Ansaugleitungen 7 mit einer oder zwei Öffnungen 10 verbunden. Bei einer weiteren, durch gestrichelte Linien in Fig. 11 dargestellten Ausführungsform sind wenigsten zwei Filter-Ventilator-Einheiten 3, vorteilhaft vier Filter-Ventilator-Einheiten, einer einzigen Öffnung 10 in der Decke 6 zugeordnet. In diesem Falle wird der Umluftteil 14 durch diese Öffnung 10 angesaugt, gelangt in ein Rohr 20, von dem entsprechende Leitungen zu den wenigstens zwei Filter-Ventilator-Einheiten 3 abzweigen. Auf diese Weise sind zwei oder mehr Filter-Ventilator-Einheiten 3 zu einer Gruppe zusammengefaßt, die den Umluftteil 14 durch eine gemeinsame Öffnung 10 erhält. Bei einer solchen Ausgestaltung des Deckenlayouts können alle beschriebenen Ausführungsbeispiele verwendet werden.

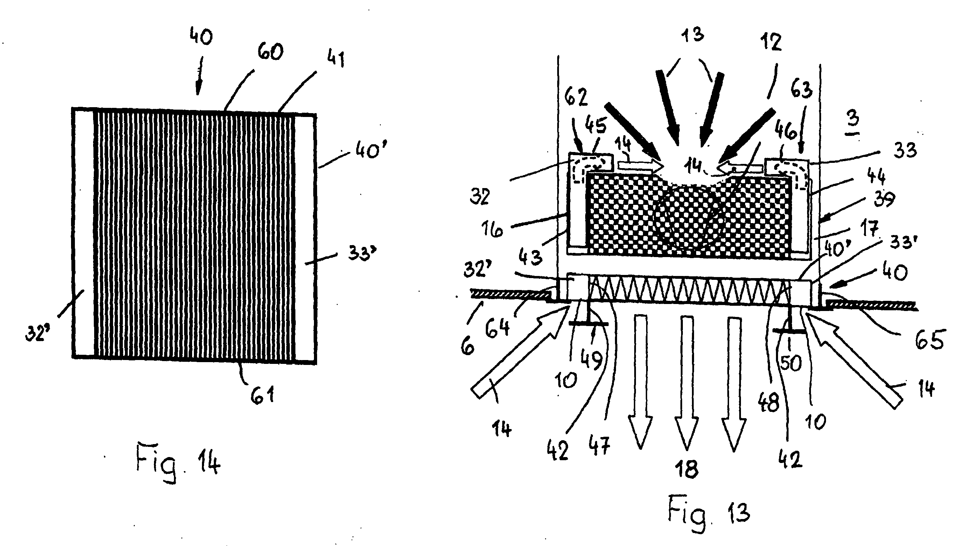

Die Ausführungsform gemäß Fig. 13 entspricht weitgehend der nach Fig. 7. Von ihr unterscheidet sie sich im wesentlichen dadurch, daß die Ventilatoreinheit 39 und das Filter 40 der Filter-Ventilator-Einheit 3 getrennte Einheiten sind. Dementsprechend haben diese Einheiten auch getrennte Strömungskanäle 62, 63 und 32', 33', die bei montierter Filter-Ventilator-Einheit 3 miteinander fluchten.

Die Strömungskanäle 32', 33' des Filters 40 sind durch doppelwandig ausgebildete Seitenwände gebildet. Der Filterrahmen 40' liegt auf den die Decke 6 bildenden Schienen 64, 65 auf, Die doppelwandigen Seitenwände liegen parallel zueinander und sind oben und unten offen und durch vorteilhaft durch Profilteile gebildete Seitenwände 60, 61 (Fig. 14) miteinander verbunden.

Die Ventilatoreinheit 39 hat das Gehäuse 11, dessen Seitenwände 16, 17 als Hohlwände ausgebildet sind. Sie liegen fluchtend zu den Seitenwänden des Filters 40. Die anderen Seitenwände des Gehäuses 11 sind wie bei den vorigen Ausführungsformen ausgebildet,

In den Seitenwänden 16, 17 sind L-förmige Strömungskanäle 62, 63 untergebracht, die frei höhenverschieblich gelagert sind. Die beiden Strömungskanäle 62, 63 sind gleich ausgebildet und spiegelsymmetrisch zueinander angeordnet. Der längere Schenkel 43, 44 der Strömungskanäle 62, 63 liegt in den einander gegenüberliegenden, zueinander parallelen Seitenwänden 16, 17 und erstreckt sich über deren Länge und Breite Der kürzere Schenkel 45, 46 liegt außerhalb der Seitenwände 16, 17. Die beiden kurzen Schenkel 45, 46 sind gegeneinander gerichtet und liegen oberhalb des Gehäuses 1. Wie Fig. 13 zeigt, enden die kurzen Schenkel 45, 46, in Draufsicht gesehen, mit Abstand vom Ventilator 12 im Gehäuse 11.

Wird die Ventilatoreinheit 39 auf das Filter 40 aufgesetzt, bilden die doppelwandigen Seitenwände des Filters 40 und die doppelwandigen Seitenwände 16, 17 der Ventilatoreinheit 39 jeweils eine durchgehende doppelwandige Seitenwand der Filter-Ventilator-Einheit 3. Diese Seitenwände bilden entsprechend der Ausführungsform gemäß Fig. 7 Rückströmkanäle für die ungekühlte Umluft 14. Sie strömt durch die in der Decke 6 liegenden Öffnungen 10 in die Rückströmkanäle und tritt oberhalb des Gebläses 12 horizontal aus den Schenkeln 45, 46 aus. Die aus den Rückluftkanälen 4, 5 kommende gekühlte Umluft 13 wird von oben angesaugt und vermischt sich vor dem Eintritt in das Gebläse 12 mit der ungekühlten Umluft 14.

Damit die aus der Filter-Ventilator-Einheit 3 nach unten in den Reinraum strömende Zuluft 18 nicht sofort wieder durch die Öffnungen 10 angesaugt wird, ist sie von der angesaugten ungekühlten Umluft durch Abschirmungen 49, 50 getrennt. Sie werden vorzugsweise durch T-förmige Schienen aus Metall, Kunststoff oder dergleichen gebildet. Sie sind mit ihrem Fuß 42 fluchtend zu den inneren Wänden 47, 48 der Strömungskanäle 32', 33' am Filterrahmen 40' befestigt. Der Steg der Abschirmungen 49, 50 liegt horizontal mit Abstand unterhalb des Filters 40.

Anstelle der über die Länge der Seitenwände des Filterrahmens 40' sich erstreckenden Strömungskanäle 62, 63 können auch kürzere oder einzelne Strömungsrohre in den Seitenwänden 16, 17 verschiebbar gelagert sein. In diesem Fall sind die Seitenwände 16, 17 im Bereich außerhalb der Strömungsrohre geschlossen, so daß die ungekühlte Rückluft 14 vollständig in die Strömungsrohre gelangt.

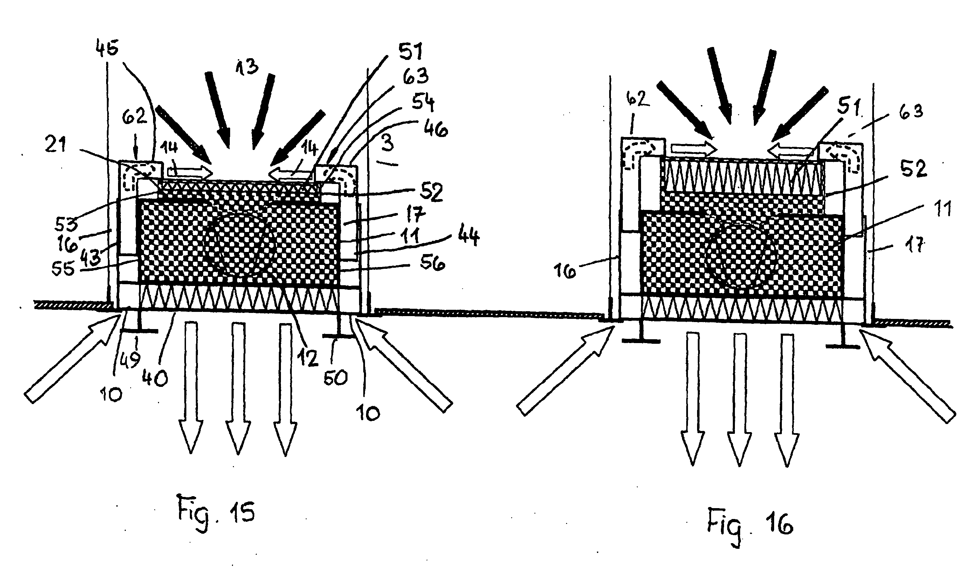

Bei der Ausführungsform gemäß Fig. 15 weist die Filter-Ventilator-Einheit 3 ein Vorfilter 51 auf, das in einem Gehäuseaufsatz 52 untergebracht ist. Dieser schließt nach oben an die Gehäusedecke 21 an und hat kleinere Grundfläche als das Gehäuse 11. Dadurch stehen die Seitenwände 53, 54 des Gehäuseaufsatzes 52 gegenüber den Innenwänden 55, 56 der Gehäusewände 16, 17 zurück. Da die Strömungskanäle 62, 63 in den Seitenwänden 16, 17 höhenverschiebbar angeordnet sind, können diese so weit herausgezogen werden, bis die kurzen Schenkel 45, 46 auf dem Gehäuseaufsatz 52 aufliegen. Die längeren Schenkel 43, 44 haben dann entsprechend der Höhe des Aufsatzes 52 größeren Abstand vom Filter 40.

Auch bei dieser Ausführungsform sind die seitlichen Abschirmungen 49, 50 neben den Einströmöffnungen 10 des Filters 40 vorhanden. Die ungekühlte Rückluft 14 strömt horizontal aus den Strömungskanälen 62, 63 oberhalb des Gehäuseaufsatzes 52 aus und vermischt sich mit der gekühlten Rückluft 13, bevor sie zum Gebläse 12 gelangt.

Im übrigen ist dieses Ausführungsbeispiel gleich ausgebildet wie die Ausführungsform gemäß Fig. 13 und 14.

Die Ausführungsform nach Fig. 16 unterscheidet sich vom vorigen Ausführungsbeispiel nur dadurch, daß das Vorfilter 51 im Gehäuseaufsatz 52 ein chemisches Filter ist. Da es dicker ist als das Vorfilter 51 gemäß Fig. 15, sind die Strömungskanäle 16, 17 entsprechend weit aus den Seitenwänden 16, 17 des Gehäuses 11 herausgezogen.

Die Ausführungsformen nach den Fig. 13 bis 16 haben den Vorteil, daß durch die in den Seitenwänden 16, 17 verschiebbar angeordneten Strömungskanäle 62, 63 eine Anpassung an unterschiedlich hohe Ventilator-Einheiten bzw. Vorfilter 51 problemlos möglich ist.

## Patentansprüche

1. Einrichtung zur Konditionierung von Luft, vorzugsweise von Reinluft, mit wenigstens einer Filter-Ventilator-Einheit (3), die ein Gehäuse und wenigstens einen Rückführkanal (4, 5) (11) aufweist und der aus einem Bereich, vorzugsweise einem Reinraum, ein Teil (13) von Umluft über den wenigstens einen Rückführkanal (4, 5) und ein Teil (14) der Umluft (13, 14) unter Umgehung des Rückführkanales (4, 5) direkt zuführbar ist,
**dadurch gekennzeichnet, dass** das Gehäuse (11) der Filter-Ventilator-Einheit (3) wenigstens einen integrierten Strömungskanal (32 bis 34; 32', 33', 62, 63) für den der Filter-Ventilator-Einheit (3) direkt zuführbaren Teil (14) der Umluft (13, 14) aufweist.

2. Einrichtung nach Anspruch 1,
**dadurch gekennzeichnet, dass** der Strömungskanal (32 bis 34; 16, 17, 62, 63) an eine Öffnung (10) in einer Reinraumdecke (6) anschließbar ist.

3. Einrichtung nach Anspruch 1 oder 2,
**dadurch gekennzeichnet, dass** der Strömungskanal (62, 63) L-förmig ausgebildet ist.

4. Einrichtung nach Anspruch 3,
**dadurch gekennzeichnet, dass** der L-förmige Strömungskanal (62, 63) höhenverstellbar in zwei einander gegenüberliegenden, doppelwandig ausgebildeten Seitenwänden (16, 17) des Gehäuses (11) angeordnet ist.

5. Einrichtung nach Anspruch 3 oder 4,
**dadurch gekennzeichnet, dass** die Strömungskanäle (62, 63) mit ihren längeren Schenkeln (43, 44) in die Seitenwände (16, 17) des Gehäuses (11) ragen.

6. Einrichtung nach einem der Ansprüche 3 bis 5,
**dadurch gekennzeichnet, dass** die Strömungskanäle (62, 63) mit ihren kürzeren Schenkeln (45, 46) auf dem Gehäuse (11) aufliegen.

7. Einrichtung nach einem der Ansprüche 3 bis 5,
**dadurch gekennzeichnet, dass** die Strömungskanäle (62, 63) mit ihren kürzeren Schenkeln (45, 46) auf einem Gehäuseaufsatz (52) für ein Vorfilter (51) einer Ventilatoreinheit (39) der Filter-Ventilator-Einheit (3) aufliegen.

8. Einrichtung nach Anspruch 7,
**dadurch gekennzeichnet, dass** der Vorfilter (51) kleinere Grundfläche als das Gehäuse (11) hat.

9. Einrichtung nach einem der Ansprüche 3 bis 8,
**dadurch gekennzeichnet, dass** sich die längeren Schenkel (43, 44) der Strömungskanäle (62, 63) im Wesentlichen über die gesamte Länge und/oder Breite der Seitenwände (16, 17) des Gehäuses (11) erstrecken.

10. Einrichtung nach einem der Ansprüche 1 bis 9,
**dadurch gekennzeichnet, dass** die Seitenwände (16, 17) der Ventilator-Einheit (39) der Filter-Ventilator-Einheit (3) mit Strömungskanälen (32', 33') des Filters (40) fluchten, die vorteilhaft durch doppelwandig ausgebildete Seitenwände gebildet sind.

11. Einrichtung nach Anspruch 10,
**dadurch gekennzeichnet, dass** die Strömungskanäle (32', 33') des Filters (40) bei montierter Filter-Ventilator-Einheit (3) mit den Seitenwänden (16, 17) der Ventilator-Einheit (39) deckungsgleich liegen.

12. Einrichtung nach Anspruch 10 oder 11;
**dadurch gekennzeichnet, dass** die Strömungskanäle (32', 33') des Filters (40) im Bereich der Raumdecke (6) Einströmöffnungen (10) für den Teil (14) der Umluft (13, 14) aufweisen.

13. Einrichtung nach einem der Ansprüche 1 bis 12,
**dadurch gekennzeichnet, dass** die Filter-Ventilator-Einheit (3) mindestens zweiteilig aus der Ventilator-Einheit (39) und dem Filter (40) gebildet ist.

14. Einrichtung nach einem der Ansprüche 10 bis 13,
**dadurch gekennzeichnet, dass** am Filter (40) mindestens eine, vorzugsweise zwei mit Abstand voneinander liegende Abschirmungen (49, 50) vorgesehen sind.

15. Einrichtung nach Anspruch 14,
**dadurch gekennzeichnet, dass** die Abschirmung (49, 50) im Wesentlichen T-förmigen Querschnitt hat und vorzugsweise als im Wesentlichen über die gesamte Länge der Strömungskanäle (62, 63) verlaufende Schiene ausgebildet ist.

16. Einrichtung zur Konditionierung von Umluft, vorzugsweise von Reinluft, mit wenigstens einer Filter-Ventilator-Einheit (3), die ein Gehäuse (11) aufweist und der aus einem Bereich, vorzugsweise einem Reinraum, ein Teil (13) von Umluft (13, 14) über wenigstens einen Rückführkanal (4, 5) und ein Teil (14) der Umluft (13, 14) unter Umgehung des Rückführkanales (4, 5) direkt zuführbar ist,
**dadurch gekennzeichnet, dass** die Einrichtung wenigstens ein Rohr (20) aufweist, wobei der der Filter-Ventilator-Einheit (3) direkt zugeführte Teil (14) der Umluft (13, 14) über das Rohr (20) einer Mischzone (25) zuführbar ist, in die beide Teile (13, 14) der Umluft strömen.

17. Einrichtung nach Anspruch 16,
**dadurch gekennzeichnet, dass** die Mischzone (25) einem Strömungskanal (24) für die Umluft (13, 14) vorgelagert ist, der durch ein Leitelement (19) zusammen mit dem Gehäuse (11) der Filter-Ventilator-Einheit (3) gebildet ist.

18. Einrichtung nach Anspruch 17,
**dadurch gekennzeichnet, dass** der der Filter-Ventilator-Einheit (3) direkt zugeführte Teil (14) der Umluft (13, 14) über das vorteilhaft das Gehäuse (11) der Filter-Ventilator-Einheit (3) mit Abstand übergreifende Leitelement (19) der Filter-Ventilator-Einheit (3) zuführbar ist.

19. Einrichtung nach Anspruch 17 oder 18,
**dadurch gekennzeichnet, dass** das Rohr (20) mit Abstand vom Gehäuse (11) der Filter-Ventilator-Einheit (3) angeordnet ist.

20. Einrichtung nach Anspruch 19,
**dadurch gekennzeichnet, dass** die Austrittsöffnung (27) des Rohres (20) mit Abstand neben dem Gehäuse (11) der Filter-Ventilator-Einheit (3) liegt.

21. Einrichtung nach Anspruch 19,
**dadurch gekennzeichnet, dass** die Austrittsöffnung (31) des Rohres (20) gegen die Filter-Ventilator-Einheit (3) gerichtet ist, mit der die Austrittsöffnung vorteilhaft eine gemeinsame Achse hat.

22. Einrichtung nach einem der Ansprüche 1 bis 21,
**dadurch gekennzeichnet, dass** der der Filter-Ventilator-Einheit (3) direkt zuführbare Teil (14) der Umluft (13,14) ungekühlt zur Filter-Ventilator-Einheit (3) strömt.

23. Einrichtung nach einem der Ansprüche 1 bis 22,
**dadurch gekennzeichnet, dass** der Rückführkanal (4, 5) wenigstens einen Umluftkühler (8, 9) aufweist.

## Claims

1. A device for conditioning air, preferably clean air, having at least one filter fan unit (3) which has a housing and at least one return channel (4, 5) and to which from a region, preferably a clean room, a portion (13) of circulating air can be supplied via the at least one return channel (4, 5) and a portion (14) of the circulating air (13, 14) can be supplied directly with bypassing of the return channel (4, 5), **characterised in that** the housing (11) of the filter fan unit (3) has at least one integrated flow channel (32 to 34; 32', 33' 62, 63) for the portion (14) of the circulating air (13, 14) able to be supplied to the filter fan unit (3) direct.

2. A device according to claim 1, **characterised in that** the flow channel (32 to 34; 16, 17, 62, 63) can be connected to an opening (10) in a clean-room ceiling (6).

3. A device according to claim 1 or 2, **characterised in that** the flow channel (62, 63) is L-shaped.

4. A device according to claim 3, **characterised in that** the L-shaped flow channel (62, 63) is arranged in a vertically displaceable manner in two facing double-walled lateral walls (16, 17) of the housing (11).

5. A device according to claim 3 or 4, **characterised in that** the flow channels (62, 63) project into the lateral walls (16, 17) of the housing (11) with their longer limbs (43, 44).

6. A device according to any one of claims 3 to 5, **characterised in that** the flow channels (62, 63) rest on the housing (11) with their shorter limbs (45,46).

7. A device according to any one of claims 3 to 5, **characterised in that** the shorter limbs (45, 46) of the flow channels (62, 63) rest on a housing top-part (52) for a preliminary filter (51) of a fan unit (39) of the filter fan unit (3).

8. A device according to claim 7, **characterised in that** the preliminary filter (51) has a smaller footprint than the housing (11).

9. A device according to any one of claims 3 to 8, **characterised in that** the longer limbs (43, 44) of the flow channels (62, 63) extend substantially over the entire length and/or width of the lateral walls (16, 17) of the housing (11).

10. A device according to any one of claims 1 to 9, **characterised in that** the lateral walls (16, 17) of the fan unit (39) of the filter fan unit (3) are aligned with flow channels (32', 33') of the filter (40), which flow channels are advantageously formed by double-walled lateral walls.

11. A device according to claim 10, **characterised in that** the flow channels (32', 33') of the filter (40) lie congruent with the lateral walls (16, 17) of the fan unit (39) when the filter fan unit (3) is mounted.

12. A device according to claim 10 or 11, **characterised in that** in the region of the room ceiling (6), the flow channels (32', 33') of the filter (40) have inlets (10) for the portion (14) of the circulating air (13, 14).

13. A device according to any one of claims 1 to 12, **characterised in that** the filter fan unit (3) is formed at least in two parts from the fan unit (39) and the filter (40).

14. A device according to any one of claims 10 to 13, **characterised in that** at least one, preferably two, screens (49, 50) at a distance from one another are provided on the filter (40).

15. A device according to claim 14, **characterised in that** the screen (49, 50) has a substantially T-shaped cross-section and is preferably in the form of a rail running over substantially the entire length of the flow channels (62, 63).

16. A device for conditioning circulating air, preferably clean air, having at least one filter fan unit (3) which has a housing (11) and to which from a region, preferably a clean room, a portion (13) of circulating air (13, 14) can be supplied via at least one return channel (4, 5) and a portion (14) of the circulating air (13, 14) can be supplied directly with bypassing of the return channel (4, 5), **characterised in that** the device has at least one pipe (20), the portion (14), of the circulating air (13, 14), supplied direct to the filter fan unit (3) being able to be supplied via the pipe (20) to a mixing zone (25) into which both portions (13, 14) of the circulating air flow.

17. A device according to claim 16, **characterised in that** the mixing zone (25) is upstream of a flow channel (24) for the circulating air (13, 14), which flow channel (24) is formed by a guide element (19) together with the housing (11) of the filter fan unit (3).

18. A device according to claim 17, **characterised in that** the portion (14) of the circulating air (13, 14) supplied direct to the filter fan unit (3) can be supplied to the filter fan unit (3) via the guide element (19) advantageously engaging over the housing (11) of the filter fan unit (3) at a distance therefrom.

19. A device according to claim 17 or 18, **characterised in that** the pipe (20) is arranged at a distance from the housing (11) of the filter fan unit (3).

20. A device according to claim 19, **characterised in that** the outlet (27) of the pipe (20) lies alongside the housing (11) of the filter fan unit (3), at a distance therefrom.

21. A device according to claim 19, **characterised in that** the outlet (31) of the pipe (20) is directed towards the filter fan unit (3), the outlet preferably having a common axis with the latter.

22. A device according to any one of claims 1 to 21, **characterised in that** the portion (14) of the circulating air (13, 14) which can be supplied direct to the filter fan unit (3) flows uncooled to the filter fan unit (3).

23. A device according to any one of claims 1 to 22, **characterised in that** the return channel (4, 5) has at least one circulating-air cooler (8, 9).

## Revendications

1. Système de conditionnement d'air, de préférence d'air purifié, comprenant au moins une unité filtre-ventilateur (3) qui comporte un boîtier (11) et au moins un canal de retour (4, 5) et à laquelle une partie (13) de l'air environnant, provenant d'une région, de préférence d'une salle propre, peut être amenée via ledit au moins un canal de retour (4, 5) et une partie (14) de l'air environnant (13, 14) peut être amenée directement en contournant le canal de retour (4, 5),
**caractérisé en ce que** le boîtier (11) de l'unité filtre-ventilateur (3) comprend au moins un canal d'écoulement intégré (32 à 34, 32', 33', 62, 63) pour la partie (14) de l'air environnant (13, 14) qui peut être amenée directement à l'unité filtre-ventilateur (3).

2. Système selon la revendication 1,
**caractérisé en ce que** le canal d'écoulement (32 à 34 ; 16, 17, 62, 63) est susceptible d'être raccordé à une ouverture (10) dans un plafond de la salle propre (6).

3. Système selon la revendication 1 ou 2,
**caractérisé en ce que** le canal d'écoulement (62, 63) est réalisé en forme de L.

4. Système selon la revendication 3,
**caractérisé en ce que** le canal d'écoulement (62, 63) en forme de L est agencé avec possibilité de réglage en hauteur dans deux parois latérales mutuellement opposées (16, 17) du boîtier (11), réalisées à double paroi.

5. Système selon la revendication 3 ou 4,
**caractérisé en ce que** les canaux d'écoulement (62, 63) pénètrent, par leurs branches longues (43, 44), dans les parois latérales (16, 17) du boîtier (11).

6. Système selon l'une des revendications 3 à 5,
**caractérisé en**tre que les canaux d'écoulement (62, 63) s'appliquent sur le boîtier (11) par leurs branches courtes (45, 46).

7. Système selon l'une des revendications 3 à 5,
**caractérisé en ce que** les canaux d'écoulement (62, 63) s'appliquent, par leurs branches courtes (45, 46), sur une coiffe de boîtier (52) pour un préfiltre (51) d'une unité à ventilateur (39) de l'unité filtre-ventilateur (3).

8. Système selon la revendication 7,
**caractérisé en ce que** le préfiltre (51) a une surface de base plus petite que le boîtier (11).

9. Système selon l'une des revendications 3 à 8,
**caractérisé en ce que** les branches longues (43, 44) des canaux d'écoulement (62, 63) s'étendent sensiblement sur la totalité de la longueur et/ou de la largeur des parois latérales (16, 17) du boîtier (11).

10. Système selon l'une des revendications 1 à 9,
**caractérisé en ce que** les parois latérales (16, 17) de l'unité à ventilateur (39) de l'unité filtre-ventilateur (3) sont en alignement avec des canaux d'écoulement (32', 33') du filtre (40), lesquels sont avantageusement formés par des parois latérales réalisées à double paroi.

11. Système selon la revendication 10,
**caractérisé en ce que** les canaux d'écoulement (32', 33') du filtre (40) coïncident avec les parois latérales (16, 17) de l'unité à ventilateur (39) lorsque l'unité filtre-ventilateur (3) est montée.

12. Système selon la revendication 10 ou 11,
**caractérisé en ce que** les canaux d'écoulement (32', 33') du filtre (40) comportent, dans la région du plafond (6) de la salle, des ouvertures d'entrée (10) pour la partie (14) de l'air environnant (13, 14).

13. Système selon l'une des revendications 1 à 12,
**caractérisé en ce que** l'unité filtre-ventilateur (3) est réalisée en au moins deux parties que sont l'unité à ventilateur (39) et le filtre (40).

14. Système selon l'une des revendications 10 à 13,
**caractérisé en ce qu'**il est prévu sur le filtre (40) au moins un écran et de préférence deux écrans situés à distance l'un de l'autre (49, 50).

15. Système selon la revendication 14,
**caractérisé en ce que** l'écran (49, 50) a une section sensiblement en forme de T et est de préférence réalisé comme un rail qui s'étend sur la totalité de la longueur des canaux d'écoulement (62, 63).

16. Système pour le conditionnement d'air environnant, de préférence d'air purifié, comprenant au moins une unité filtre-ventilateur (3) qui comporte un boîtier (11) et à laquelle une partie (13) de l'air environnant (13, 14) qui provient d'une région, de préférence d'une salle propre, peut être amenée via au moins un canal de retour (4, 5) et une partie (14) de l'air environnant (13, 14) peut être amenée directement en contournant le canal de retour (4, 5),
**caractérisé en ce que** le système comprend au moins un tube (20), et la partie (14) de l'air environnant (13, 14) amenée directement au filtre-ventilateur (3) peut être amenée via le tube (20) à une zone de mélange (25) dans laquelle s'écoulent les deux parties (13, 14) de l'air environnant.

17. Système selon la revendication 16,
**caractérisé en ce que** la zone de mélange (25) est située en amont d'un canal d'écoulement (24) pour l'air environnant (13, 14), ce canal étant formé par un élément de guidage (19) conjointement avec le boîtier (11) de l'unité filtre-ventilateur (3).

18. Système selon la revendication 17,
**caractérisé en ce que** la partie (14) de l'air environnant (13, 14) amenée directement à l'unité filtre-ventilateur (3) peut être amenée via l'élément de guidage (19) de filtre-ventilateur (3), lequel coiffe avantageusement le boîtier (11) de l'unité filtre-ventilateur (3) à distance.

19. Système selon la revendication 17 ou 18,
**caractérisé en ce que** le tube (20) est agencé à distance du boîtier (11) de l'unité filtre-ventilateur (3).

20. Système selon la revendication 19,
**caractérisé en ce que** l'ouverture de sortie (27) du tube (20) est située à distance à côté du boîtier (11) de l'unité filtre-ventilateur (3).

21. Système selon la revendication 19,
**caractérisé en ce que** l'ouverture de sortie (31) du tube (20) est orientée vers l'unité filtre-ventilateur (3), avec laquelle l'ouverture de sortie possède avantageusement un axe commun.

22. Système selon l'une des revendications 1 à 21,
**caractérisé en ce que** la partie (14) de l'air environnant (13, 14) qui peut être amenée directement à l'unité filtre-ventilateur (3) s'écoule vers l'unité filtre-ventilateur (3) sans être refroidie.

23. Système selon l'une des revendications 1 à 22,
**caractérisé en ce que** le canal de retour (4, 5) comporte au moins un dispositif de refroidissement (8, 9) pour l'air environnant.
